# EUROPÄISCHE PATENTSCHRIFT

(11) **EP 1 727 320 B1**
(45) Veröffentlichungstag und Bekanntmachung des Hinweises auf die Patenterteilung: **16.04.2008**
(21) Anmeldenummer: 06011247.1
(22) Anmeldetag: 27.05.2005
(51) Int. Cl.: H04L 12/56

(54) **Verfahren und Vorrichutn zum nach ATM-Kanälen geordneten Bereitstellen von ATM-Zellen an einer zwischen einem ersten und einem zweiten Knoten eines Übertragungssystems angeordneten Schnittstelle**
Method and apparatus to provide ATM cells ordered according to ATM channels in an interface of a communication sytem placed between a first and a second node
Procédé et dispositif pour mettre à disposition des cellules ATM ordonnées selon des canaux ATM dans une interface d'un système de communication disposé entre un premier et un deuxième noeud

(43) Veröffentlichungstag der Anmeldung: 29.11.2006
(62) Teilanmeldung aus: 05011503.9
(73) Patentinhaber: Tektronix International Sales GmbH, 8212 Neuhausen (CH)
(72) Erfinder: Brinner, Helge, 14057 Berlin (DE)
(74) Vertreter: Patentanwälte Hofstetter, Schurack & Skora

(56) Entgegenhaltungen:
- US-A1- 2002 054 600
- US-B1- 6 788 691

## Beschreibung

Die vorliegende Erfindung betrifft generell die ATM (Asynchronous Transfer Mode)-Übertragung. Sie betrifft insbesondere ein Verfahren und eine Vorrichtung zum nach ATM-Kanälen geordneten Bereitstellen von ATM-Zellen an einer zwischen einem ersten und einem zweiten Knoten eines Übertragungssystems angeordneten Schnittstelle, wobei an der Schnittstelle eine Vielzahl von Übertragungen auf einer Vielzahl von ATM-Kanälen stattfindet, wobei fortwährend geöffnete ATM-Kanäle nach Beendigung der zugehörigen Übertragung geschlossen und neue ATM-Kanäle bei Beginn einer neuen Übertragung geöffnet werden, wobei auf jedem ATM-Kanal eine Abfolge von ATM-Zellen übertragen wird, wobei in jeder ATM-Zelle eine Adressinformation mit zumindest einem ersten Adressidentifikator übertragen wird, die die Zugehörigkeit zu einem bestimmten ATM-Kanal anzeigt, wobei folgende Schritte ausgeführt werden: Zunächst wird für eine bestimmte ATM-Zelle die Adressinformation ermittelt. Dann wird anhand einer Tabelle, in der jede Adressinformation auf eine Kanalkennung abgebildet ist, überprüft, ob die Adressinformation bereits in der Tabelle erfasst ist. Ist dies der Fall, wird der ATM-Zelle für die Weiterverarbeitung die Kanalkennung gemäß der Tabelle zugewiesen. Ist die Adressinformation in der Tabelle noch nicht erfasst, wird eine freie Kanalkennung an die Adressinformation zugewiesen und diese Kanalkennung und die Adressinformation in der Tabelle erfasst.

Anschließend werden die ATM-Zellen geordnet nach Kanalkennungen für eine Weiterverarbeitung bereitgestellt.

Grundsätzlich werden in ATM-Systemen die Daten in Zellen von einer Länge von 53 Byte übertragen, wobei 5 Byte für den Header reserviert sind und 48 Byte für die Payload. Jede Zelle hat eine Adressinformation, die zwei Adressidentifikatoren umfasst, nämlich die VPI (Virtual Path Identifier) und die VCI (Virtual Channel ldentifier). Des weiteren umfasst der Zell-Header einen Payload Type Identifier PTI, der drei Bits umfasst. Gemäß dem OSI-Referenzmodell ist eine Schicht vorgesehen, nämlich der so genannte ATM-Adaption-Layer (AAL), der den Transport größerer Datenpakete regelt. Dabei werden zwei unterschiedliche Kodiervorschriften verwendet, nämlich AAL2 und AAL5.

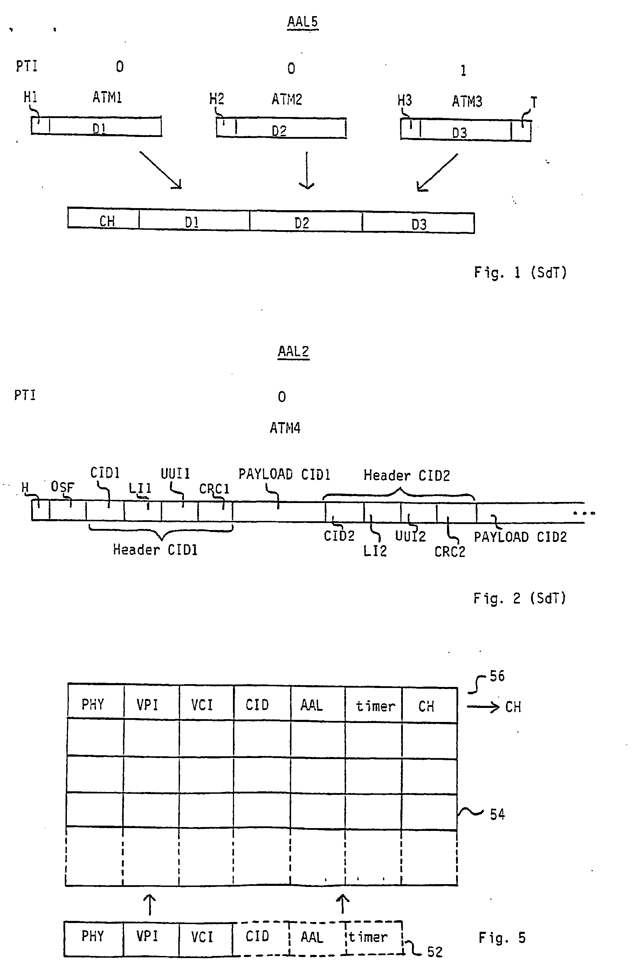

Figur 1 zeigt beispielhaft den bekannten Aufbau von ATM-Zellen bei AAL5: Jede ATM-Zelle ATM1, ATM2, ATM3 weist einen Header H1, H2, H3 und eine Payload D1, D2, D3 auf. Die letzte Zelle einer Übertragung weist überdies einen Trailer T auf. Diese letzte Zelle ist bei AAL5 durch den Payload Type Identifier "001" oder "011" gekennzeichnet. Bei allen anderen Zellen hat der Payload Type Identifier bei AAL5 den Wert "000" oder "010". Die ATM-Zellen ATM1, ATM2, ATM3, die zum selben ATM-Kanal gehören, werden nach Kanälen geordnet zusammengefügt, siehe Figur 1. Bei AAL5 wird demnach alle Information mit derselben VPINCI-Adresse einem ATM-Kanal CH zugehörig bezeichnet.

Im Falle von AAL2 kann ein Kanal mit derselben VPINCI-Adresse bis zu 255 Subkanäle enthalten, die mit so genannten CIDs (Channel ldentifier) gekennzeichnet sind. Subkanäle mit unterschiedlichen CIDs betreffen die Übertragung von Informationen für unterschiedliche Teilnehmer. Mit Bezug auf Figur 2 ist der Payload Type-Identifier PTI für jede ATM-Zelle ATM4 bei AAL2 gleich "000". Die dargestellte ATM-Zelle ATM4 weist zunächst einen Header auf, dem ein OSF (Offset-Feld) folgt. Das Offset-Feld gibt an, wo die erste CID, vorliegend die CID1, positioniert ist. Dies ist deshalb nötig, da CIDs zellenübergreifend sein können. Auf die CID1 folgt das Feld LI1, das die Länge der ersten Payload "Payload CID1" angibt. Dann folgt das Feld UUI1 sowie das Feld CRC1, das das Ergebnis eines Cyclic-Redundancy-Checks, d. h. einer zyklischen Blockprüfung, über den Header der CID1, der Felder CID1, LI1, UUI1 und CRC1 enthält, wiedergibt. Nach der Payload CID1 folgt der Header der CID2 mit den Feldern CID2, LI2, UUI2, CRC2. Daran schließt sich die Payload CID2 an, usw.

Im Sinne der nachfolgenden Erfindung werden auch Kanäle mit derselben VPINCI/CID-Adresse als ATM-Kanäle bezeichnet.

Welche Koeiervorschrift für die Übertragung verwendet wird, bestimmt im UMTS-Netz beispielsweise der Knoten RNC, je nach dem, welche Anforderung von einem Teilnehmer, beispielsweise einem Handy, insbesondere Sprachübertragung oder Übertragung von Daten aus dem Internet, an ihn gerichtet wurde. Ein Monitoringgerät, das der Überwachung an der Schnittstelle dient, bekommt daher ohne Auffinden, Konfiguren und Dekodieren der Kanäle, auf denen Steuerungsinformationen (Control Plane Daten) übertragen werden, die vereinbarte Kodiervorschrift nicht mit.

Im Stand der Technik erfordern daher Messgeräte, insbesondere zum Monitoren von Übertragungen auf ATM-Kanälen an einer zwischen einem ersten und einem zweiten Knoten eines Übertragungssystems angeordneten Schnittstelle, die manuelle Konfiguration der ATM-Kanäle. Dabei wird der Benutzer aufgefordert, manuell die VPI/VCI-Adressen und den zugehörigen AAL-Typ des Kanals einzugeben, den er monitoren will. Im Falle von AAL2 müssen darüber hinaus auch alle CIDs manuell konfiguriert werden.

Zur Überprüfung, ob die Adresskombination der aktuellen ATM-Zelle bereits in der Tabelle erfasst ist, werden im Stand der Technik Tabellensuchalgorithmen verwendet, die einen äußerst schnellen und damit sehr teuren RAM-Speicher sowie eine hohe Prozessorleistung voraussetzen, da der Algorithmus für die Suche selbst in Software formuliert ist.

Diese manuelle Konfiguration weist zwei wesentliche Nachteile auf: Eine einmal vorgenommene manuelle Konfiguration ist fest. Eine Anpassung an Änderungen in der Konfiguration der Schnittstelle, die der Benutzer monitort, beispielsweise beim Öffnen neuer Kanäle und beim Schließen vorhandener Kanäle, wird nicht vorgenommen. Weiterhin weiß der Benutzer in den meisten Fällen nicht, welche ATM-Kanäle an der Schnittstelle, die gemonitort werden soll, vorhanden sind. Mit der zeitaufwändigen und fehlerbehafteten manuellen Konfiguration ist es nicht möglich, Kanäle an der Schnittstelle zu monitoren, deren VPI/VCI-Adressen dem Benutzer nicht bekannt sind.

Im Zusammenhang mit der Übertragung von ATM-Zellen sei auf die US 6,788,691 B1 verwiesen, die ein Verfahren zum Einrichten mehrerer AAL2-Kanäle zwischen über eine aus einem einzigen virtuellen ATM-Kanal bestehenden Verbindung zusammenarbeitenden Funktionen offenbart. Jede der zusammenarbeitenden Funktionen umfasst eine Systemmanagementschichtinstanz, eine ANP-Schichtmanagementinstanz und einen Protokollstapel. Die ANP-Schichtmanagementinstanzen sind ferner unterteilt in eine Reihe von Funktionsblöcken, die Ursprungsprozeduren, Abschlussprozeduren und eine Statusaufzeichnungsinstanz umfassen. Die Statusaufzeichnungsinstanz zeichnet auf, ob jeder AAL2-Kanal aus der Mehrzahl der AAL2-Kanäle zugewiesen/nicht zugewiesen oder aktiviert/deaktiviert ist. Die AAL2-Kanäle werden durch Austausch von Nachrichten zwischen den Instanzen der zusammenarbeitenden Funktionen verwaltet, wobei die Statusaufzeichnungen anhand der ausgetauschten Nachrichten aktualisiert werden.

Ferner sei auf die US 2002/0054600 A1 verwiesen, die eine Vorrichtung zum dynamischen Management virtueller Kanäle offenbart. Diese umfasst eine Erfassungseinheit zum Erfassen eines aktiven virtuellen Kanals ankommender ATM-Zellen und eine Managementspeichereinheit zum Verwalten von Managementinformationen über den erfassten aktiven virtuellen Kanal auf einer virtueller-Kanal-für-virtueller-Kanal-Basis, wobei ein Frame-für-Frame-Prozess an Zellen ausgeführt wird, deren VPI mit der eines von der Managernentspeichereinheit verwalteten aktiven virtuellen Kanals übereinstimmt. Aus dieser Druckschrift geht außerdem hervor, dass eine Tabelle, die einer VPI/VCI-Adresse eines aktiven virtuellen Kanals eine eigene Nummer zuordnet, durch einen CAM-Speicher realisiert ist.

Die allgemeine Aufgabe der vorliegenden Erfindung besteht darin, die Nachteile des Stands der Technik zu überwinden und ein Verfahren bzw. eine Vorrichtung bereitzustellen, das/die das Monitoren benutzerfreundlicher macht, die Gefahr von Falscheingaben minimiert sowie ein verbessertes Monitoren ermöglicht.

Die grundsätzliche Lösung dieser Aufgabe besteht darin, das eingangs genannte Verfahren bzw. eine entsprechende Vorrichtung derart weiterzubilden, dass dadurch eine permanente Autokonfiguration und damit eine permanente Überwachung der ATM-Kanäle an der Schnittstelle ermöglicht wird.

Die grundsätzliche Lösung gemäß der vorliegenden Erfindung kann in drei unterschiedliche Lösungsaspekte unterteilt werden: 1. Maßnahmen zur Erzielung der für ein permanentes Monitoring benötigten hohen Verarbeitungsgeschwindigkeit zum nach ATM-Kanälen geordneten Bereitstellen von ATM-Zellen; 2. Maßnahmen zur Autokonfiguration; und 3. Maßnahmen, die ein nach ATM-Kanälen geordnetes permanentes Bereitstellen von ATM-Zellen selbst bei begrenzten Speichermöglichkeiten, ermöglichen.
Der erste Teilaspekt wird gelöst durch ein Verfahren mit den Merkmalen von Patentanspruch 1 sowie durch eine Vorrichtung mit den Merkmalen von Patentanspruch 5.

Die Lösung basiert auf der Erkenntnis, dass die nötige Verarbeitungsgeschwindigkeit erreicht werden kann, wenn ein CAM (Content Addressable Memory)-Speicher verwendet wird und als Dateneingangssignal die Adressinformation der gerade zur Auswertung anliegenden ATM-Zelle an den CAM-Speicher angelegt wird, wobei der CAM-Speicher so organisiert ist, dass er dann als Adressausgangssignal die Kanalkennung, sofern vorhanden, bereitstellt. Dabei wird eine so genannte NSE (Network Search Engine = Netzwerksuchmaschine) benutzt, ein CAM-Speicher mit speziellen Funktionsblöcken, insbesondere zusätzlichen Maskenregistern und einer direkten SRAM-Schnittstelle, die verwendet werden kann, um einen Index als direkten Zeiger zur Adressierung des SRAMs zu verwenden. Diese NSE dient auch zur Speicherung des AAL-Typs der ATM-Zelle zusammen mit der Kanalkennung und der Adressinformation.

Eine NSE der Firma IDT vom Typ 75N42102 ermöglicht beispielsweise 80 Millionen Abfragen pro Sekunde. Um eine derart hohe Anzahl an Abfragen überhaupt zu ermöglichen, ist bei einer bevorzugten Ausführungsform der Erfindung vorgesehen, dass am Ein- und Ausgang des CAM-Speichers Zustandsmaschinen gekoppelt sind. Demnach wird in Schritt b) zur Erzeugung einer Anfrage, bei der das Daten-Eingangssignal an den CAM-Speicher gekoppelt wird, eine Hauptzustandsmaschine verwendet und in Schritt b1) und in Schritt b2) zur Erfassung des Ergebnisses der Anfrage eine Ergebnis-Zustandsmaschine verwendet.

Bei dem genannten Baustein der Firma IDT kann, sofern die Hauptzustandsmaschine, der CAM-Speicher und die Ergebniszustandsmaschine miteinander auf ein gemeinsames Taktsignal synchronisiert sind, von der Hauptzustandsmaschine maximal eine Anfrage pro zwei Taktzyklen erzeugt und zur Verarbeitung an den CAM-Speicher angelegt werden, wobei der CAM-Speicher für die Verarbeitung einer Anfrage neun Taktzyklen benötigt, d. h. dass es neun Taktzyklen dauert, bis das Ergebnis an der Ergebniszustandsmaschine bereitgestellt wird. Gemäß einer bevorzugten Ausführungsform ist daher vorgesehen, dass die Ergebniszustandsmaschine die vom CAM-Speicher bereitgestellten Ergebnisse sammelt, damit sie den entsprechenden Anfragen der Hauptzustandsmaschine zugewiesen werden können. Durch diese Maßnahme lässt sich die maximale Verarbeitungsgeschwindigkeit des CAM-Speichers umsetzen, ohne dass nach einer Anfrage zunächst neun Taktzyklen gewartet werden müsste, bis das Ergebnis an der Ergebniszustandsmaschine bereitgestellt würde, bevor die nächste Anfrage von der Hauptzustandsmaschine an den CAM-Speicher gerichtet werden könnte.

Der zweitgenannte Teilaspekt wird gelöst durch ein Verfahren und eine Vorrichtung wie sie in der EP 1 727 315 A1 beansprucht sind.

Dieser Aspekt betrifft demnach die Ermittlung mindestens eines Übertragungsparameters einer ATM-Übertragung und basiert auf der Erkenntnis, dass für die grundsätzliche Entscheidung, ob eine AAL2- oder AAL5-Übertragung vorliegt, der Payload-Type-Identifier in Verbindung mit einem nur von AAL2 erfülltem Kriterium ausgewertet werden kann. Damit ist die Basis für eine Autokonfiguration eines Monitoringgeräts geschaffen.

Als Kriterium, das dabei zu prüfen ist, kommt eines oder kommen mehrere aus folgender Auswahl in Betracht: der CRC5-Check (d.h. die zyklische Blockprüfung) über die erste, durch das OSF-Feld bestimmte CID ist gültig; der Paritäts-Check über das OSF-Feld ist gültig; der Wert des UUI-Felds der ersten CID ist kleiner als 27; das erste CID-Feld ist nicht gleich 0x00.

Eine besonders bevorzugte Ausführungsform zeichnet sich dadurch aus, dass, wenn das zumindest eine Kriterium für AAL2 erfüllt ist, anschließend die CIDs ermittelt werden. Dazu wird das OSF-Feld der aktuellen ATM-Zelle ausgelesen. Danach wird gemäß der durch das OSF-Feld bestimmten Position innerhalb der Zelle die erste CID gelesen und im Anschluss daran das erste LI-Feld. Unter Verwendung des LI-Felds und der Position innerhalb der Zelle wird ein Offset-Wert ermittelt, der es ermöglicht, die zweite CID auszulesen. Sofern diese CID vorhanden ist (Wert ungleich 0), wird der nächste Offset-Wert ermittelt. Anschließend wird die nächste CID ausgelesen. Diese Schritte werden wiederholt, bis alle CID-Felder erfasst sind.

Bei AAL5 wird zusammen mit dem zugehörigen AAL-Typ und der zugewiesenen Kanalkennung jede Kombination aus VPINCI-Adresse in der Tabelle gemäß dem ersten Lösungsaspekt eingetragen. Optional kann auch ein Timer-Wert betreffend ein Zeitsignal zugeordnet werden. Bei AAL2 wird darüber hinaus jeder Kombination aus VPINCI/CID-Adresse der Tabelle gemäß dem ersten Lösungsaspekt eine Kanalkennung zugewiesen, wobei auch hier der zugehörige AAL-Typ und optional ein zugehöriger Timer-Wert abgespeichert werden. Zur Funktion eines solchen Timer-Werts wird auf die Ausführungen weiter unten verwiesen.

Der dritte Teilaspekt wird gelöst durch ein Verfahren und eine Vorrichtung wie sie in der EP 1 727 319 A1 beansprucht sind.

Diese Lösung basiert auf der Erkenntnis, dass dies bei einem gattungsgemäßen Verfahren optimal gelöst werden kann, wenn ein zyklischer Zähler verwendet wird, der jeweils nach einer vorgebbaren Zeitdauer einen Zeitschritt weiterzählt, wobei in der Tabelle zusammen mit der Kanalkennung und der Adressinformation der zugehörige Zählerstand der Erfassung der betreffenden Kanalkennung und Adressinformation bzw. deren letztes Update abgelegt wird. Damit wird die Möglichkeit bereitgestellt, dass die ältesten Einträge, die ja bei einem zyklischen Zähler eine bestimmten Zählerstand aufweisen, nämlich den aktuellen Zählerstand minus 1, abgefragt und gelöscht werden können. Wird die vorgebbare Zeitdauer so gewählt, dass von der Zeitdauer her alle in Betracht kommenden Übertragungen im Hinblick auf den Wertebereich des Zählerstands des zyklischen Zählers erfasst werden können, kann somit sichergestellt werden, dass trotz einer ihrem Umfang nach physikalisch begrenzten Tabelle ein permanentes Monitoren einer ATM-Übertragung an der Schnittstelle ermöglicht wird.

Besonders vorteilhaft lässt sich das Verfahren umsetzen, wenn zur Realisierung der Tabelle ein CAM-Speicher verwendet wird. Noch vorteilhafter ist es, wenn der CAM-Speicher in eine NSE eingebunden ist, da dadurch Möglichkeiten bereitgestellt werden eine Maske zu kreieren, mit der die gewünschten Werte des Zählerstands an den CAM-Speicher zur Abfrage erzeugt werden können.

Bevorzugt wird zum Löschen der Einträge mit einem bestimmten Zählerstand folgendermaßen vorgegangen: Zunächst wird eine Abfragemaske für den CAM-Speicher erzeugt, die zumindest den bestimmten Zählerstand enthält. Dann werden alle Einträge mit dem bestimmten Zählerstand im CAM-Speicher aufgefunden und anschließend all diese Einträge gelöscht. Insbesondere in Verbindung mit einer eingangsseitig angeordneten Zustandsmaschine lassen sich daher über ein Minimum an Taktzyklen eines Takts, auf den eine derartige am Eingang angeordnete Zustandsmaschine und der CAM-Speicher synchronisiert sind, die entsprechenden Kanäle aus der Tabelle löschen.

Die im Zusammenhang mit dem erfindungsgemäßen Verfahren vorgestellten Vorteile und bevorzugten Ausführungsformen gelten in entsprechender Weise für die erfindungsgemäße Vorrichtung. Es ist besonders darauf hinzuweisen, dass das erfindungsgemäße Verfahren und die erfindungsgemäße Vorrichtung, insbesondere auch die jeweils bevorzugten Ausführungsformen, beliebig mit den in Zusammenhang mit dem zweiten und dem dritten Lösungsaspekt beschriebenen Verfahren und Vorrichtungen kombiniert werden können.

Weitere vorteilhafte Ausführungsformen sind den Unteransprüchen zu entnehmen. Im Nachfolgenden wird nunmehr ein Ausführungsbeispiel der Erfindung unter Bezugnahme auf die beigefügten Zeichnungen näher beschrieben. Es zeigen:
- Figur 1: in schematischer Darstellung den aus dem Stand der Technik bekannten Aufbau einer auf einem ATM-Kanal unter Verwendung von AAL5 übertragenen Nachricht aus mehreren ATM-Zellen;
- Figur 2: in schematischer Darstellung den aus dem Stand der Technik bekannten Aufbau einer auf einem ATM-Kanal unter Verwendung von AAL2 übertragenen Nachricht aus mehreren ATM-Zellen;
- Figur 3: in Blockschaltbilddarstellung den Aufbau einer erfindungsgemäßen Vorrichtung;
- Figur 4: eine detailliertere schematische Darstellung eines Teilbereichs von Figur 3;
- Figur 5: eine schematische Darstellung einer Abfrage bei einer Ausführungsform eines erfindungsgemäßen Messgeräts, in der die Tabelle durch einen CAM-Speicher realisiert ist; und
- Figur 6: in schematischer Darstellung eine bei einer Ausführungsform eines erfindungsgemäßen Messgeräts verwendete Vorrichtung zur Bereitstellung eines Zeitsignals, das in der Tabelle abgelegt wird.

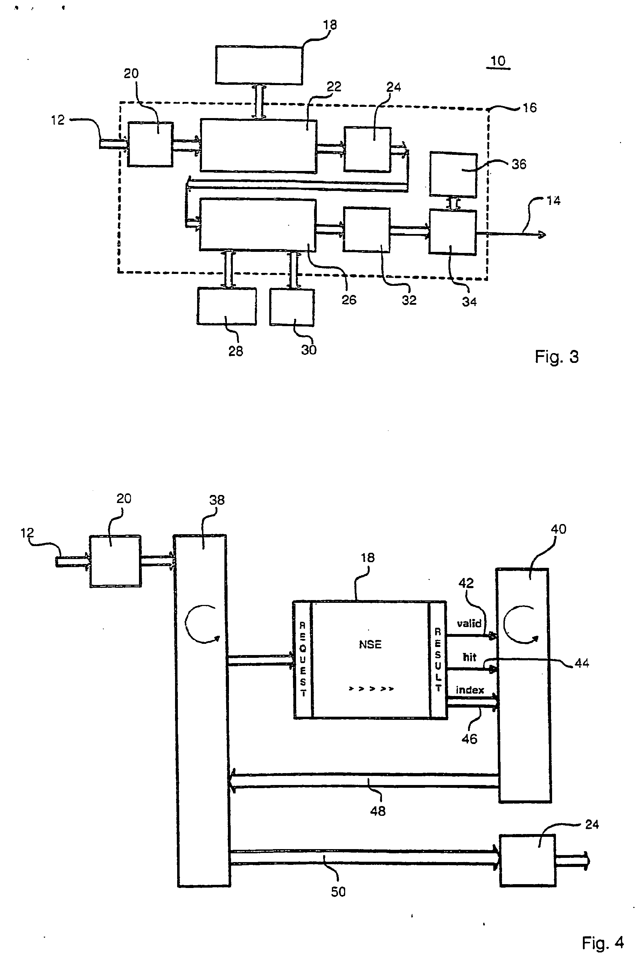

Figur 3 zeigt in schematischer Darstellung den für die vorliegende Erfindung relevanten Aufbau einer erfindungsgemäßen Vorrichtung. Dabei wird ein ATM-Datenstrom auf einer physikalischen Schnittstelle, beispielsweise UTOPIA-II, am Eingang 12 bereitgestellt. Wie mit Bezug auf Figur 5 noch genauer spezifiziert wird, wird vorliegend ein ATM-Datenstrom über vier verschiedene physikalische Schnittstellen PHY1 bis PHY4 bereitgestellt. Zur Bereitstellung von nach ATM-Kanälen geordneten Daten am Ausgang 14 der Vorrichtung 10 wirken im Wesentlichen zwei Komponenten zusammen, nämlich ein FPGA (Field Programmable Gate Array = frei programmierbares Verknüpfungsfeld) sowie eine NSE 18, die einen CAM-Speicher umfasst. Hierbei ist eine NSE eine spezialisierte Form eines CAM-Speichers. Während ein normales RAM (Random Access) an seinem Eingang adressiert wird und an seinem Ausgang die Daten bereitstellt, die unter dieser Adresse gespeichert sind, kann an einen CAM-Speicher eine Abfrage mit bekannten Daten angelegt werden, wobei der CAM-Speicher an seinem Ausgang die zugehörige Adresse bereitstellt, unter der diese Daten gespeichert sind. Diese Adresse wird im Nachfolgenden mit Index bezeichnet und gibt die Kanalkennung CH, d.h. den Kanal wieder, zu dem die ATM-Zelle gehört. Ein CAM-Speicher wird daher vorliegend zur Hardware-Implementierung eines Tabellensuchalgorithmus verwendet.

Ein DPR (Dual-Ported RAM) 20 dient der Bereitstellung von Daten an die eigentliche Autokonfigurationseinheit 22. Die Autokonfigurationseinheit 22 wirkt mit der NSE 18 zusammen, was genauer weiter unten mit Bezug auf Figur 4 beschrieben wird. Am Ausgang der Autokonfigurationseinheit 22 ist ein DPR 24 vorgesehen, der die ATM-Zellen bereitstellt, für die eine Zuordnung zu einem ATM-Kanal möglich gewesen ist. Diese werden an eine AAL-Reassembly-Vorrichtung 26 gekoppelt, die mit einem DDR-SDRAM (Synchronous Dynamic Random Access Memory) 28 und einem SRAM (Static Random Access Memory) 30 zur Durchführung des Reassemblys zusammenwirkt. Dabei sind im SRAM 30 Parameter für den Reassembly-Prozess abgelegt, während das DDR-SDRAM 28 die Pufferung der großen anfallenden Datenmengen beim Zusammenbau übernimmt. Über eine optionale Filtereinheit 32 werden die Daten an eine GBE (Gigabit Ethernet)-Schnittstelle 34 geleitet, die mit einem Power PC 36 zusammenwirkt, wobei am Ausgang 14 der GBE-Schnittstelle 34 die Daten nach Kanälen geordnet und derart konfiguriert bereitgestellt werden, dass sie auf einem Gigabit-Ethernet transportiert werden können. In der Filtereinheit 32 kann nach bestimmten Protokollinhalten, d. h. nach bestimmten Pattern gesucht werden, so dass nur diese am Ausgang 14 bereitgestellt werden. Dadurch, dass vorliegend die genannten Parameter des betreffenden Kanals direkt in der NSE hinterlegt werden, kann auf ein weiteres SRAM verzichtet werden.

Figur 4 zeigt in detaillierterer Darstellung einen Ausschnitt aus Figur 3. Dabei umfasst die Autokonfigurationsvorrichtung 22 eine Hauptzustandsmaschine 38 und eine Ergebniszustandsmaschine 40, die zur Durchführung der Autokonfiguration mit der NSE 18 zusammenwirkt. Bei einer NSE 18 handelt es sich um eine gepipelinete Vorrichtung, d. h. eine Vorrichtung, die zeitverschachtelt arbeitet. In einer speziellen Ausführungsform akzeptiert sie 80 Millionen Anfragen pro Sekunde, d. h. eine Anfrage alle zwei Taktzyklen eines gemeinsamen Taktsignals, während es neun Taktzyklen bedarf, bis das Ergebnis der Anfrage am Ausgang der NSE 18 bereitgestellt wird. Unter Verwendung von zwei Zustandsmaschinen muss nicht vor Anlegen einer erneuten Abfrage das Ergebnis der vorhergehenden Abfrage abgewartet werden. Vielmehr ist es möglich, dadurch die maximale Verarbeitungsgeschwindigkeit der NSE 18 auszunutzen. Gemäß der Darstellung von Figur 4 erzeugt die Hauptzustandsmaschine 38 alle Abfragen an die NSE im Abstand von zwei Taktzyklen. Die Ergebniszustandsmaschine 40 sammelt die Ergebnisse in der entsprechenden Reihenfolge. Dabei wird über die Leitung 42 ein Signal an die Ergebniszustandsmaschine 40 gelegt, welches die Ergebniszustandsmaschine 40 informiert, dass ein neues Ergebnis vorliegt. Über die Leitung 44 wird ein positives Signal an die Ergebniszustandsmaschine 40 geliefert, wenn die Abfrage erfolgreich war. Gleichzeitig wird über die Leitung 46 die Adresse des Eintrags an die Ergebniszustandsmaschine 40 geliefert. Ein gleichzeitiges positives Signal auf den Leitungen 42 und 44 informiert daher die Ergebniszustandsmaschine 40, dass das Ergebnis einer erfolgreichen Abfrage anliegt, ein positives Signal auf der Leitung 42 und ein negatives Signal auf der Leitung 44 informiert die Ergebniszustandsmaschine 40, dass die Abfrage nicht erfolgreich war, d.h. die abgefragten Daten nicht gefunden werden konnten. Über eine Leitung 48 stellt die Ergebniszustandsmaschine 40 die Ergebnisse der Abfrage an die Hauptzustandsmaschine 38 bereit. Die Hauptzustandsmaschine 38 erzeugt daraufhin für Abfragen, die nicht erfolgreich waren, d. h. keinen Treffer geliefert haben, neue Einträge in der NSE 18. Außerdem stellt die Hauptzustandsmaschine 38 die ATM-Zellen nach Kanälen geordnet, d. h. sowohl für Kanäle, die bereits in der NSE 18 vorhanden waren als auch für Kanäle, für die Neueinträge in der NSE 18 erzeugt werden mussten, über die Leitung 50 an den DPR 24 zur Weiterverarbeitung bereit.

### Zur detaillierten Funktion der Hauptzustandsmaschine 38:

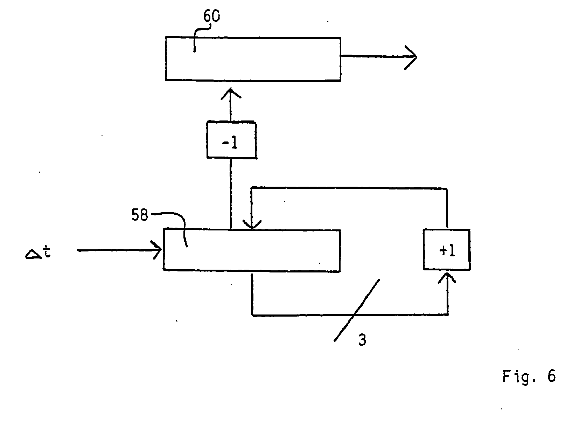

Für jede ATM-Zelle werden die folgenden Schritte ausgeführt:
a) Zunächst wird beim DPR 20 nachgefragt, ob neue zur Verarbeitung anstehende ATM-Zellen vorliegen.
b) Falls eine neue ATM-Zelle verfügbar ist, wird die Nummer des physikalischen Eingangsanschlusses PHY der Zelle erfasst und die Zelle mit einem Zeitstempel versehen;
c) Anschließend wird ein HEC (Header Error Correction)-Check ausgeführt, wobei der CRC 8 über den Header der Zelle berechnet wird. Schlägt der HEC-Check fehl, wird die Zelle verworfen. Zellen mit fehlgeschlagenem HEC-Check und Zellen, die einen erfolgreichen HEC-Check absolviert haben, werden nach Eingangsanschlüssen PHY gezählt.
d) Dann wird der Zelle die Adressinformation VPINCI entnommen, wobei dies aufgrund der Synchronisation auf Zellenanfang und Zellenende ohne weiteres möglich ist.
   d1) Als nächstes wird eine Abfrage an die NSE für die gegenwärtige Kombination von PHYNPINCI erzeugt.
   d2) Dann wird eine Abfrage an die NSE für die gegenwärtige Kombination von AALx erzeugt. Mit AALx wird hierbei bezeichnet, dass für diese Kombination von PHYNPINCI der AAL noch nicht bekannt ist und deshalb, wie nachfolgend noch genauer dargestellt, ermittelt werden muss.
   d3) Dann wird eine Abfrage an die NSE für die gegenwärtige Kombination von PHYNPINCI/AAL5 erzeugt.
   d4) Dann wird eine Abfrage an die NSE für die gegenwärtige Kombination von PHYNPINCI/AAL2 erzeugt.
   d5) Schließlich wird eine Abfrage an die NSE für die gegenwärtige Kombination von PHY/VPI/VCI/AALy erzeugt. Mit AALy wird hierbei bezeichnet, dass für diese Kombination von PHYNPINCI der AAL-Typ 5 angenommen und verwendet wird, aber noch nicht eindeutig erkannt ist.
e) Anschließend wird Synchronisation mit der Ergebniszustandsmaschine hergestellt und die Ergebnisse der Abfragen d1 bis d4 empfangen.
   e1) Wenn die Abfrage für PHY/VPI/VCI nicht erfolgreich war, fahre fort mit Schritt f).
   e2) Falls ein Eintrag für PHY/VPI/NCI/AALx nicht gefunden wurde, fahre fort mit Schritt f).
   e3) Falls ein Eintrag für PHY/VPI/VCI/AAL5 gefunden wurde, fahre fort mit Schritt g).
   e4) Falls ein Eintrag für PHYNPINCI/AAL2 gefunden wurde, fahre fort mit Schritt h).
   e5) Falls ein Eintrag für PHY/VPI/VCI/AALy nicht gefunden wurde, fahre fort mit Schritt i).
f) Autokonfiguration:
   f1) Falls der Payload-Type-Identifier PTI gleich "001" oder "011" ist, wird ein CRC 32 Check über die gesamte Payload ausgeführt. Wird dieser CRC 32 Check erfolgreich absolviert, wird der Kanal als AAL5 klassifiziert. Schlägt dieser CRC 32 Check jedoch fehl, wird der Kanal als AALy klassifiziert. Falls ein neuer AAL5- oder AALy-Kanal gefunden wurde, wird ein neuer Eintrag in der NSE 18 kreiert. Dieser Eintrag umfasst eine neue Kanalkennung sowie das aktuelle Zeitsignal. Details zum Zeitsignal werden mit Bezug auf Figur 6 gegeben werden. Die Weiterverarbeitung erfolgt mit Schritt g).
   f2) Falls der Payload-Type-Identifier PTI gleich 000" ist, wird AAL2 angenommen und zumindest ein Kriterium für AAL2 überprüft:
      - der CRC5-Check über die erste, durch das OSF-Feld bestimmte CID ist gültig;
      - der Paritätscheck über das OSF-Feld ist gültig;
      - der Wert des UUI-Felds der ersten CID ist kleiner als 27;
      - das erste CID-Feld ist nicht gleich 0x00.
      Falls zumindest ein Kriterium, bevorzugt alle Kriterien, erfüllt sind, wird der Kanal als AAL2 klassifiziert. In der NSE 18 wird ein Eintrag für einen AAL2 (Basis-)-Kanal erzeugt, wobei wiederum das aktuelle Zeitsignal mitabgelegt wird. Die Weiterverarbeitung erfolgt mit Schritt h).
   f3) Nicht erfolgreiche Autokonfiguration: Falls Schritt f2) nicht erfolgreich abgeschlossen werden konnte, ist die Autokonfiguration missglückt. Ursache kann sein, dass es sich bei der gegenwärtigen Zelle um eine Zelle in der Mitte einer längeren AAL5-PDU (Protocol Data Unit) oder eine AAL2-PDU ohne gültige CID handelt. Der letzte Fall kann auftreten, wenn der Rest der Payload einer vorhergehenden Zelle in die nächste Zelle hineinreicht. In diesem Fall wird der Zelle eine vorgebbare Bezeichnung zugewiesen. Diese kann darin bestehen, das der Status unbestimmt ist, wobei zum Beispiel die Bezeichung AALy zugewiesen wird.
g) Verarbeitung einer AAL5-Zelle:
   g1) Der NSE-Eintrag wird mit den aktuellen Daten (beispielsweise dem neu konfigurierten AAL5-Typ und/oder dem aktuellen Zeitsignal) aktualisiert;
   g2) Anschließend wird die Zelle an den DPR 24, der als Schnittstelle zu der AAL-Reassembly-Vorrichtung 26 dient, geleitet.
h) Verarbeitung einer AAL2-Zelle:
   Wird eine Zelle als AAL2-Zelle erkannt, müssen alle CIDs gefunden werden. Innerhalb einer Zelle können bis zu 12 CIDs verwendet werden. Dies erfolgt in einem zweistufigen Prozess:
   h1) Ermitteln aller CIDs:
      Die Hauptzustandsmaschine 38 ermittelt die erste CID durch Auswertung des Werts des OSF-Felds. Da das OSF-Feld immer an derselben Stelle einer ATM-Zelle vom AAL2-Typ positioniert ist, kann es leicht gefunden und ausgelesen werden. Damit lässt sich die erste CID ermitteln und eine Abfrage PHY/VPI/VCI/CID1 an die NSE 18 richten. Nachfolgende CIDs werden aufgefunden, indem das LI-Feld der ersten CID ausgelesen wird, welches die Länge der zur ersten CID gehörenden Daten angibt. Dadurch kann der Offset und damit die Position der zweiten CID CID2 gefunden werden. Dabei wird der Header jeder CID einem CRC5-Check unterzogen. Nach Auffinden aller CIDs der aktuellen ATM-Zelle wird Schritt h2) ausgeführt.
   h2) Erzeuge eine Synchronisation mit der Ergebniszustandsmaschine;
      Falls ein Eintrag für die jeweilige CID in der NSE gefunden werden konnte und der CRC-Check erfolgreich absolviert wurde, wird die ATM-Zelle zusammen mit der ermittelten Kanalkennung an den DPR 24 weitergeleitet. Außerdem wird der entsprechende Eintrag in der NSE mit dem aktuellen Zeitsignal upgedated. Falls die Abfrage keinen Eintrag ergeben hat, wird eine neue Kanalkennung CH für diese CID kreiert und ein entsprechender Eintrag in die NSE gemacht; zusätzlich wird das zugehörige Zeitsignal in der NSE 18 abgelegtl. Genaueres zum Zeitsignal wird nachfolgend mit Bezug auf Figur 6 ausgeführt werden.
i) 2. Schritt der Autokonfiguration für AALy:
   Zunächst wird eine Prüfung gemäß den Schritten f1) und f2) durchgeführt.
   Falls jetzt AAL5 eindeutig gefunden wird, wird AAL Typ 5 konfiguriert.
   Falls jetzt AAL2 eindeutig gefunden wird, wird AAL Typ 2 konfiguriert.
   Falls weder AAL2 noch AAL5 gefunden wird, bleibt es beim Typ AALy.

Figur 5 zeigt in schematischer Darstellung das Prinzip der Abfrage an den CAM-Speicher der NSE 18. In einem Register 52 sind die Daten wiedergegeben, deren Vorhandensein in der Tabelle 54 ermittelt werden soll. In dem Register 52 kann eine unterschiedliche Auswahl der angegebenen Elemente als Abfragemaske definiert werden, beispielsweise PHY/VPI/VCI, PHY/VPI/VCI/AAL, PHY/VPI/VCI/CID, Timer, etc.. Die für das Register 52 verwendeten Abkürzungen sind selbstverständlich in der realen Abfrage durch entsprechende Werte ersetzt. Die Kanalkennung CH der ermittelten Einträge wird am Ausgang 56 der Tabelle 54 bereitgestellt. Wird für die durch das Register 52 spezifizierte Abfrage kein Eintrag ermittelt, wird ein entsprechendes Signal am Ausgang 56 der Tabelle 54 bereitgestellt, z.B. CH = 0.

Mit Bezug auf Figur 6 wird im Nachfolgenden die Realisierung eines Timers wiedergegeben, der die permanente Überwachung der Übertragung auf ATM-Kanälen an der Schnittstelle ermöglicht, obwohl die Speicherkapazitäten des CAM-Speichers naturgemäß begrenzt sind. Dazu muss ein Timeout-Signal, d. h. ein Löschsignal, für die Kanäle erzeugt werden, für die in der NSE 18 ein Eintrag vorhanden ist, die jedoch innerhalb eines vorgegebenen Zeitraums nicht upgedated wurden und die daher zu löschen sind. Dabei wird nach jeder Zeitdauer Δt der Zählerstand im Register 58 um 1 erhöht. Vorliegend handelt es sich um einen 3-Bit-Zähler. Ist der Maximalwert erreicht (111), so setzt der Zähler beim nächsten Takt mit dem Wert 000 fort. Ein Eintrag im Register 58 wird als Zeitsignal in der im CAM-Speicher abgelegten Tabelle erfasst. Im Register 60 ist der im Register 58 erfasste Zählerstand minus 1 wiedergegeben. Unter Verwendung dieses im Register 60 wiedergegebenen Zählerstands kann zu vorgegebenen Zeitpunkten eine Abfrage, siehe Figur 5, an die Tabelle 54 gerichtet werden, um alle die Einträge zu ermitteln, die den Zählerstand im Register 60 als Zeitsignal in der Spalte "Timer" eingetragen haben, um diese zu löschen. Dies sind nämlich die ältesten in der Tabelle 54 erfassten Einträge, für die am längsten kein Update mehr stattgefunden hat.

## Patentansprüche

1. Verfahren zum nach ATM-Kanälen geordneten Bereitstellen von ATM-Zellen an einer zwischen einem ersten und einem zweiten Knoten eines Übertragungssystems angeordneten Schnittstelle, wobei an der Schnittstelle eine Vielzahl von Übertragungen auf einer Vielzahl von ATM-Kanälen stattfindet, wobei fortwährend geöffnete ATM-Kanäle nach Beendigung der zugehörigen Übertragung geschlossen und neue ATM-Kanäle bei Beginn einer neuen Übertragung geöffnet werden, wobei auf jedem ATM-Kanal eine Abfolge von ATM-Zellen übertragen wird,
wobei in jeder ATM-Zelle eine Adressinformation mit zumindest einem ersten Adressidentifikator übertragen wird, die die Zugehörigkeit zu einem bestimmten ATM-Kanal anzeigt, folgende Schritte umfassend:
a) für eine bestimmte ATM-Zelle: Ermitteln der Adressinformation;
b) anhand einer Tabelle (54), in der jede Adressinformation auf eine Kanalkennung (CH) abgebildet ist: Überprüfen, ob die Adressinformation bereits in der Tabelle (54) erfasst ist;
b1) falls die Adressinformation bereits in der Tabelle (54) erfasst ist:
- Zuweisen der Kanalkennung (CH) gemäß der Tabelle (54) an die ATM-Zelle zur Weiterverarbeitung;
b2) falls die Adressinformation in der Tabelle (54) noch nicht erfasst ist:
- Zuweisen einer freien Kanalkennung (CH) an die Adressinformation;
- Erfassen dieser Kanalkennung (CH) und der Adressinformation in der Tabelle (54);
c) Bereitstellen der ATM-Zellen geordnet nach Kanalkennungen (CH) für eine Weiterverarbeitung; **dadurch gekennzeichnet dass** zur Realisierung der Tabelle (54) ein CAM-Speicher (18) verwendet wird und
in Schritt b) als Daten-Eingangssignal die Adressinformation an den CAM-Speicher (18) gekoppelt wird und der CAM-Speicher (18) als Adress-Ausgangssignal in Schritt b1) die Kanalkennung (CH) und in Schritt b2) ein Signal bereitstellt, das darauf hinweist, dass die Adressinformation in der Tabelle (54) noch nicht erfasst ist, und
es sich bei dem CAM-Speicher um eine Network Search Engine im weiteren NSE genannt, (18) handelt und
in Schritt b2) zusammen mit der Kanalkennung (CH) und der Adressinformation auch der AAL-Typ der jeweiligen ATM-Zelle in der NSE (18) gespeichert wird.

2. Verfahren nach Anspruch 1,
wobei in Schritt b) zur Erzeugung einer Anfrage, bei der das Daten-Eingangssignal an den CAM-Speicher (18) gekoppelt wird, eine Hauptzustandsmaschine (38) verwendet wird, und
**dass** in Schritt b1) und in Schritt b2) zur Erfassung des Ergebnisses der Anfrage eine Ergebnis-Zustandsmaschine (40) verwendet wird.

3. Verfahren nach Anspruch 2,
wobei die Hauptzustandsmaschine (38), der CAM-Speicher (18) und die Ergebnis-Zustandsmaschine (40) miteinander auf ein gemeinsames Taktsignal synchronisiert sind, wobei die Hauptzustandsmaschine (38) eine Anzahl N von Anfragen alle n Taktzyklen erzeugt und an den CAM-Speicher (18) anlegt, wobei der CAM-Speicher (18) alle m Taktzyklen das Ergebnis der N Anfragen an die Ergebnis-Zustandsmaschine (40) bereitstellt, wobei m größer n ist.

4. Verfahren nach Anspruch 3,
wobei die Hauptzustandsmaschine (38) innerhalb eines vorgebbaren Zeitraums alle n Taktzyklen eine Anfrage an den CAM-Speicher (18) anlegt, wobei die Ergebniszustandsmaschine (40) die vom CAM-Speicher (18) bereitgestellten Ergebnisse sammelt, damit sie den entsprechenden Anfragen zugewiesen werden können.

5. Vorrichtung zum nach ATM-Kanälen geordneten Bereitstellen von ATM-Zellen an einer zwischen einem ersten und einem zweiten Knoten eines Übertragungssystems angeordneten Schnittstelle, wobei an der Schnittstelle eine Vielzahl von Übertragungen auf einer Vielzahl von ATM-Kanälen stattfindet, wobei fortwährend geöffnete ATM-Kanäle nach Beendigung der zugehörigen Übertragung geschlossen und neue ATM-Kanäle bei Beginn einer neuen Übertragung geöffnet werden, wobei auf jedem ATM-Kanal eine Abfolge von ATM-Zellen übertragen wird,
wobei in jeder ATM-Zelle eine Adressinformation mit zumindest einem ersten Adressidentifikator übertragen wird, die die Zugehörigkeit zu einem bestimmten ATM-Kanal anzeigt, umfassend:
a) Mittel zum Ermitteln der Adressinformation für eine bestimmte ATM-Zelle;
b) Mittel zum Überprüfen anhand einer Tabelle (54), in der jede Adressinformation auf eine Kanalkennung (CH) abgebildet ist, ob die Adressinformation bereits in der Tabelle (54) erfasst ist;
b1) Mittel zum Zuweisen der Kanalkennung (CH) gemäß der Tabelle (54) an die ATM-Zelle zur Weiterverarbeitung, falls die Adressinformation bereits in der Tabelle (54) erfasst ist;
b2) Mittel zum Zuweisen einer freien Kanalkennung (CH) an die Adressinformation; und
Mittel zum Erfassen dieser Kanalkennung (CH) und der Adressinformation in der Tabelle (54),
falls die Adressinformation in der Tabelle (54) noch nicht erfasst ist.
c) Mittel zum Bereitstellen der ATM-Zellen geordnet nach Kanalkennungen (CH) für eine Weiterverarbeitung; **dadurch gekennzeichnet dass** die Tabelle (54) durch einen CAM-Speicher (18) realisiert ist, wobei das Daten-Eingangssignal an den CAM-Speicher (18) die Adressinformation ist, und wobei das Adress-Ausgangssignal des CAM-Speichers (18) im Falle von b1) die Kanalkennung (CH) und im Falle von b2) ein Signal ist, das darauf hinweist, dass die Adressinformation in der Tabelle (54) noch nicht erfasst ist, und es sich bei dem CAM-Speicher um eine Network Search Engine im weiteren NSE genannt, (18) handelt und die NSE (18) auch zur Speicherung des AAL-Typs der jeweiligen ATM-Zelle zusammen mit der Kanalkennung (CH) und der Adressinformation dient.

## Claims

1. Method for the provision, in an order according to ATM channels, of ATM cells at an interface arranged between a first and a second node of a transmission system, wherein at the interface there occurs a plurality of transmissions on a plurality of ATM channels, wherein continually open ATM channels are closed after completion of the associated transmission and new ATM channels are opened at the start of a new transmission, wherein on each ATM channel there is transmitted a sequence of ATM cells,
wherein in each ATM cell an address information having at least one first address identifier is transmitted, which shows the affiliation with a specific ATM channel, comprising the following steps:
a) for a specific ATM cell: determining the address information;
b) on the basis of a table (54), in which each address information is mapped onto a channel ID (CH): verifying, whether the address information has already been recorded in the table (54);
b1) in case the address information has already been recorded in the table (54):
- assigning the channel ID (CH) according to the table (54) to the ATM cell for further processing;
b2) in case the address information has not yet been recorded in the table (54):
- assigning a free channel ID (CH) to the address information;
- recording said channel ID (CH) and the address information in the table (54);
c) providing the ATM cells, in an order according to the channel IDs (CH), for further processing;
**characterized in that**
for realising the table (54) a CAM memory (18) is used
and
in step b) the address information as a data input signal is coupled to the CAM memory (18), and the CAM memory (18) provides, in step b1), the channel ID (CH) as an address output signal, and in step b2), a signal indicating that the address information in the table (54) has not yet been recorded, and
the CAM memory is a Network Search Engine (18) referred to as NSE in the following, and
in step b2) together with the channel ID (CH) and the address information also the AAL type of the respective ATM cell is stored in the NSE (18).

2. Method according to claim 1,
wherein in step b) a main state machine (38) is used for generating a request, in which the data input signal is coupled to the CAM memory (18), and
that in step b1) and in step b2) a result state machine (40) is used for recording the result of the request.

3. Method according to claim 2,
wherein the main state machine (38), the CAM memory (18) and the result state machine (40) are synchronised with each other to a common clock signal,
wherein the main state machine (38) generates a number N of requests every n clock cycles and applies them to the CAM memory (18), wherein the CAM memory (18) makes the result of the N requests available to the result state machine (40) every m clock cycles, wherein m is greater than n.

4. Method according to claim 3,
wherein the main state machine (38) applies a request to the CAM memory (18) every n clock cycles within a predeterminable period, wherein the result state machine (40) collects the results made available by the CAM memory (18), so that they can be assigned to the relevant requests.

5. Device for the provision, in an order according to ATM channels, of ATM cells at an interface arranged between a first and a second node of a transmission system, wherein at the interface a plurality of transmissions on a plurality of ATM channels occurs, wherein continually open ATM channels are closed after completion of the associated transmission and new ATM channels are opened at the start of a new transmission, wherein on each ATM channel a sequence of ATM cells is transmitted,
wherein in each ATM cell an address information having at least one first address identifier is transmitted, which shows the affiliation with a specific ATM channel, comprising the following:
a) means for determining the address information for a specific ATM cell;
b) means for verifying on the basis of a table (54), in which each address information is mapped onto a channel ID (CH), whether the address information has already been recorded in the table (54);
b1) means for assigning the channel ID (CH) according to the table (54) to the ATM cell for further processing, if the address information has already been recorded in the table (54);
b2) means for assigning a free channel ID (CH) to the address information; and
means for recording said channel ID (CH) and the address information in the table (54),
in case the address information has not yet been recorded in the table (54).
c) means for providing the ATM cells, in an order according to the channel IDs (CH), for further processing;
**characterised in that**
the table (54) is realised by a CAM memory (18), wherein the data input signal to the CAM memory (18) is the address information, and wherein, in the case of b1), the address output signal of the CAM memory (18) is the channel ID (CH) and, in the case of b2), a signal indicating that the address information has not yet been recorded in the table (54), and that the CAM memory is a Network Search Engine (18) referred to as NSE in the following and
the NSE (18) also serves for storing the AAL type of the respective ATM cell together with the channel ID (CH) and the address information.

## Revendications

1. Procédé destiné à procurer, dans une interface disposée entre un premier noeud et un second noeud d'un système de transmission, des cellules de mode de transfert asynchrone ATM agencées selon des canaux ATM, dans lequel une pluralité de transmissions ont lieu dans l'interface via une pluralité de canaux ATM, dans lequel, de façon continue, des canaux ATM ouverts sont fermés lors de l'interruption de la transmission correspondante et de nouveaux canaux ATM sont ouverts lors de l'établissement d'une nouvelle transmission, dans lequel une séquence de cellules ATM sont transférées dans chaque canal ATM,
dans lequel une information d'adressage comportant au moins un premier identifiant d'adressage est transférée dans chaque cellule ATM et indique l'appartenance à un canal ATM déterminé, comportant les étapes suivantes :
a) pour une cellule ATM spécifique : détermination de l'information d'adressage ;
b) sur base d'une table (54) dans laquelle chaque information d'adressage est associée à un indicatif de canal (CH) : vérification de l'acquisition de l'information d'adressage dans la table (54) ;
b1) si l'information d'adressage est déjà acquise dans la table (54) :
- attribution de l'indicatif de canal (CH) à la cellule ATM selon la table (54) en vue d'un traitement ultérieur ;
b2) si l'information d'adressage n'est pas encore acquise dans la table (54) :
- attribution d'un indicatif de canal libre (CH) à l'information d'adressage ;
- acquisition de cet indicatif de canal (CH) et de l'information d'adressage dans la table (54) ;
c) procuration de cellules ATM agencées selon des indicatifs de canal (CH) pour un traitement ultérieur ;
**caractérisé en ce qu'**une mémoire associative CAM (18) est employée pour réaliser la table (54)
et **en ce que**, à l'étape b), l'information d'adressage est envoyée à la mémoire CAM (18) comme signal d'entrée des données et **en ce que**, à l'étape b1), la mémoire CAM (18) procure l'indicatif de canal (CH) comme signal de sortie d'adressage et, à l'étape b2), un signal indiquant que l'information d'adressage n'a pas encore été acquise dans la table (54),
la mémoire CAM comportant un moteur de recherche de réseau ou Network Search Engine (18), désigné par la suite comme NSE,
et **en ce que**, à l'étape b2), le type AAL de la cellule ATM correspondante est également enregistré dans le NSE (18), ainsi que l'indicatif de canal (CH) et l'information d'adressage.

2. Procédé selon la revendication 1,
dans lequel, à l'étape b), une machine à états principale (38) est employée pour générer une requête
dans laquelle le signal d'entrée de données est envoyé à la mémoire CAM (18),
ladite machine étant employée à l'étape b1) et à l'étape b2) pour acquérir le résultat de la requête provenant d'une machine à états de résultats (40).

3. Procédé selon la revendication 2,
dans lequel la machine à états principale (38), la mémoire CAM (18) et la machine à états de résultats (40) sont synchronisées par un signal d'horloge commun, dans lequel, tous les n cycles d'horloge, la machine à états principale (38) génère un nombre N de requêtes et les consigne dans la mémoire CAM (18) et
dans lequel, tous les m cycles d'horloge, la mémoire CAM (18) procure le résultat des N requêtes à la machine à états de résultats (40), m étant supérieur à n.

4. Procédé selon la revendication 3,
dans lequel, tous les n cycles d'horloge durant une période déterminée, la machine à états principale (38) consigne une requête dans la mémoire CAM (18), et dans lequel la machine à états de résultats (40) collecte les résultats fournis par la mémoire CAM (18), de manière à ce qu'ils puissent être assignés aux requêtes correspondantes.

5. Dispositif destiné à procurer, dans une interface disposée entre un premier noeud et un second noeud d'un système de transmission, des cellules de mode de transfert asynchrone ATM agencées selon des canaux ATM, dans lequel une pluralité de transmissions ont lieu dans l'interface via une pluralité de canaux ATM,
dans lequel, de façon continue, des canaux ATM ouverts sont fermés lors de l'interruption de la transmission correspondante et de nouveaux canaux ATM sont ouverts lors de l'établissement d'une nouvelle transmission,
dans lequel une séquence de cellules ATM sont transférées dans chaque canal ATM,
dans lequel une information d'adressage comportant au moins un premier identifiant d'adressage est transférée dans chaque cellule ATM et indique l'appartenance à un canal ATM déterminé, comportant les moyens suivants :
a) un moyen destiné à procurer l'information d'adressage d'une cellule ATM déterminée ;
b) un moyen de vérification sur base d'une table (54), dans laquelle chaque information d'adressage est associée à un indicatif de canal (CH) indiquant si l'information d'adressage est déjà acquise dans la table (54) ;
b1) un moyen d'attribution de l'indicatif de canal (CH) à la cellule ATM selon la table (54) en vue d'un traitement ultérieur, dans le cas où l'information d'adressage est déjà acquise dans la table (54) ;
b2) un moyen d'attribution d'un indicatif de canal libre (CH) à l'information d'adressage ; et
un moyen d'acquisition de cet indicatif de canal (CH) et de l'information d'adressage dans la table (54),
dans le cas où l'information d'adressage n'est pas encore acquise dans la table (54).
c) un moyen destiné à procurer les cellules ATM agencées selon des indicatifs de canal (CH) pour un traitement ultérieur ;
**caractérisé en ce qu'**une mémoire associative CAM (18) est employée pour réaliser la table (54), dans lequel le signal d'entrée des données de la mémoire CAM (18) est l'information d'adressage, et dans lequel le signal de sortie d'adressage de la mémoire CAM (18) est, dans le cas b1), l'indicatif de canal (CH) et, dans le cas b2), un signal indiquant que l'information d'adressage de la table (54) n'est pas encore acquise, et où la mémoire CAM comporte un moteur de recherche de réseau ou Network Search Engine (18), désigné par la suite comme NSE,
dans lequel le NSE (18) sert également à l'enregistrement du type AAL de la cellule ATM correspondante, ainsi que de l'indicatif de canal (CH) et de l'information d'adressage.
